# EUROPEAN PATENT APPLICATION

(11) **EP 4 578 540 A1**
(43) Date of publication of application: **02.07.2025**
(21) Application number: 23856890.1
(22) Date of filing: 10.04.2023
(51) Int. Cl.: B01J 8/08, B01J 8/18, B01J 8/38

(54) **REACTION SYSTEM AND METHOD FOR PRODUCING PRODUCT**

(30) Priority: 23.08.2022 JP 2022132361
(71) Applicant: The Japan Steel Works, Ltd., Tokyo 141-0032 (JP)
(72) Inventor: UEDA, Naoki, Tokyo 141-0032 (JP); NAKAMURA, Satoru, Tokyo 141-0032 (JP); FURUKI. Kenichi, Tokyo 141-0032 (JP); HIRAMATSU, Seiya, Tokyo 141-0032 (JP)
(74) Representative: Simmons & Simmons LLP (Munich)
(86) International application number: PCT/JP2023/014638
(87) International publication number: WO 2024/042770

(57) **Abstract**

A reaction system (1) produces a product from a raw material to be treated. The reaction system (1) includes a reaction oven (100) and a conveyance device (141). The reaction oven (100) has: feed ports (110) through which a raw material (10A) to be treated and a conveyance aid (20) are received; a delivery port (120) through which a produced product (10B) is sent out; and a tubular body (101) in which the portion ranging from the feed ports (110) to the delivery port (120) accepts a mixture of the raw material (10A) to be treated or the product (10B) and the conveyance aid (20). The conveyance device (141) conveys the mixture in the tubular body (101) from the feed ports (110) to the delivery port (120).

## Description

### Technical Field

The present invention relates to a reaction system and a method of manufacturing a product.

### Background Art

There are reaction systems that manufacture a desired product by agitating raw materials or the like in a preset environment.

For example, Patent Literature 1 discloses a reaction apparatus described below. The reaction apparatus includes a screw feeder main body to be used as a pressure reaction container, a catalyst supplying unit that introduces a catalyst into the screw feeder main body, and a low hydrocarbon supplying unit that introduces a low hydrocarbon into the screw feeder main body. In addition, the reaction apparatus includes a screw that transports generated nanocarbon, a solid sending unit that sends out the catalyst and the nanocarbon conveyed by the screw, and a gas sending unit that sends generated hydrogen to outside of the feeder main body.

### Citation List

### Patent Literature

Patent Literature 1: Japanese Unexamined Patent Application Publication No. 2006-290682

### Summary of Invention

However, when conveying a treated material with a fine particle size using conveying means such as a screw, there is a risk of agglomeration or solidification of the treated material due to stagnation in a gap in a structure of the conveying means or in a space not directly reached by a conveying force. An occurrence of such a state may cause a quality of products manufactured by the reaction system to vary. Alternatively, when a conveying speed by the conveying means is relatively low, a reaction rate of the agglomerated treated material may decline and may result in reduced efficiency of the reaction system.

An object of the present disclosure, which has been made in order to solve such a problem, is to provide a reaction system and the like that can manufacture products in an efficient manner.

A reaction system according to the present disclosure manufactures a product from a treated material. The reaction system includes a reaction furnace and a conveying apparatus. The reaction furnace includes a supply port configured to receive the treated material and a conveyance auxiliary material, a sending port configured to send out the product having been manufactured, and a tubular body between the supply port and the sending port and configured to accept a mixture in which the treated material or the product and the conveyance auxiliary material are mixed. The conveying apparatus is configured to convey the mixture in the tubular body from the supply port to the sending port.

A method of manufacturing a product according to the present disclosure is a method of manufacturing a product from a treated material. The method includes a supplying step, a conveying step, and a sending step. The supplying step involves supplying a treated material and a conveyance auxiliary material to a reaction furnace. The conveying step involves conveying a mixture in which the treated material and the conveyance auxiliary material are mixed to the sending port with a conveying apparatus. The sending step involves sending out a product generated from the treated material from the sending port.

According to the present disclosure, a reaction system and the like that can manufacture products in an efficient manner can be provided.

### Brief Description of Drawings

Fig. 1 is an overall configuration diagram of a reaction system according to a first embodiment;
Fig. 2 is a flowchart of a method of manufacturing a product according to the first embodiment;
Fig. 3 is an overall configuration diagram of a reaction system according to a second embodiment;
Fig. 4 is a flowchart of a method of manufacturing a product according to the second embodiment;
Fig. 5 is an overall configuration diagram of a reaction system according to a third embodiment;
Fig. 6 is a diagram showing details of a fluidized bed generating apparatus 300; and
Fig. 7 is a flowchart of a method of manufacturing a product according to the third embodiment.

### Description of Embodiments

Hereinafter, while the present invention will be described through embodiments of the invention, the invention as set forth in the claims is not limited to the following embodiments. Furthermore, not all components described in the embodiments are essential as solutions to the problem. In the following description and in the drawings, omissions and abridgments have been made when appropriate to do so for the sake of clarity. In the respective drawings, same elements are denoted by same reference signs and repetitive descriptions are omitted as needed.

### < First Embodiment >

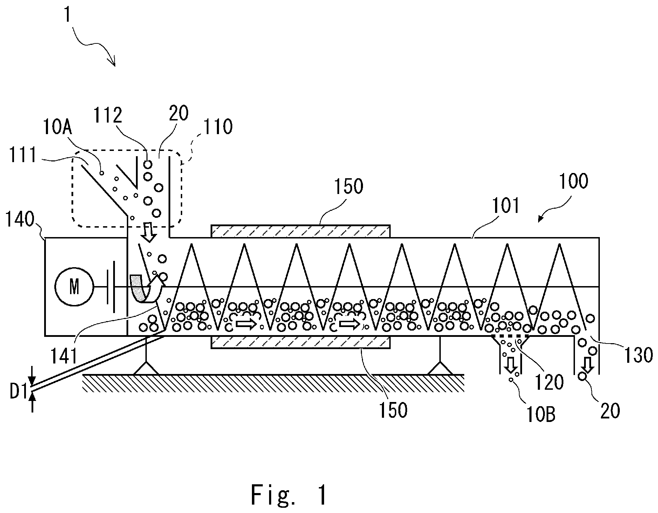

A first embodiment will be described with reference to Fig. 1. Fig. 1 is an overall configuration diagram of a reaction system 1 according to the first embodiment. The reaction system 1 shown in Fig. 1 manufactures a product by subjecting a treated material to a preset treatment. While products to be manufactured by the reaction system 1 are not particularly limited, examples of the products include battery components such as a solid electrolyte and a cathode active material used in all-solid-state lithium-ion secondary batteries. While the preset treatment is not particularly limited as long as the preset treatment is means used in a process of changing the treated material into the product, an example of the preset treatment is a temperature change such as heating or cooling. For example, the preset treatment may include a stress transfer such as agitating, mixing, kneading, or grinding. Alternatively, the preset treatment may be a reaction involving a transfer of electrons and radicals, for example. Alternatively, the preset treatment may involve coming into contact with a catalyst, for example. The reaction system 1 is mainly constituted of a reaction furnace 100 and a conveying apparatus 141.

The reaction furnace 100 is mainly constituted of a supply port 110, a sending port 120, and a tubular body 101. In addition, the reaction furnace 100 includes a conveyance auxiliary material discharge port 130 and a temperature control apparatus 150.

While the terms "upstream" and "downstream" will be used hereinafter in the present disclosure, upstream and downstream are defined as follows. At a point A being an arbitrary position along a route from the supply port 110 to the sending port 120 of the reaction furnace 100, a position close to the supply port 110 as viewed from the point A will be defined as an upstream position and a position close to the sending port 120 as viewed from the point A will be defined as a downstream position. In addition, an upstream side refers to an upstream direction as viewed from the point A and a downstream side refers to a downstream direction as viewed from the point A. Furthermore, the "upstream" and "downstream" directions described above are similarly defined outside of the supply port 110 and the sending port 120. For example, when an object flowing from the supply port 110 to the sending port 120 further flows beyond the sending port 120, the object can be described as flowing downstream beyond the sending port 120.

The supply port 110 is an opening provided in the tubular body 101 and respectively receives a treated material 10A and a conveyance auxiliary material 20. The supply port 110 according to the present embodiment includes a first supply port 111 and a second supply port 112. The first supply port 111 receives the treated material 10A. The second supply port 112 receives the conveyance auxiliary material 20. Note that the supply port 110 may be configured so that the treated material 10A and the conveyance auxiliary material 20 are fed to the supply port 110 in a mixed state. Once the supply port 110 receives the treated material 10A and the conveyance auxiliary material 20, the supply port 110 supplies the treated material 10A and the conveyance auxiliary material 20 to the tubular body 101.

The conveyance auxiliary material 20 is used to convey the treated material 10A without stagnation and an example thereof is a granular material such as sand or spherical beads. While the conveyance auxiliary material 20 can have any shape, the conveyance auxiliary material 20 is preferably spherical. In addition, while a material of the conveyance auxiliary material 20 is not particularly limited, for example, the conveyance auxiliary material 20 is a solid that can be mixed with and separated from the treated material 10A such as silica sand, ceramics, glass, carbon, activated carbon, or metal. Desirably, a particle size of the conveyance auxiliary material 20 differs from that of the treated material 10A so that the conveyance auxiliary material 20 and a product 10B can be easily separated. While means of measuring the particle size described above is not particularly limited, for example, an average (mean diameter) of a particle size distribution measured by a laser diffraction/scattering particle size distribution measuring apparatus (for example, LA960 manufactured by HORIBA, Ltd.) may be adopted. Accordingly, the reaction system 1 is to convey a mixture of the treated material 10A and the conveyance auxiliary material 20 to enable agglomeration and stagnation of the treated material 10A to be suppressed.

The sending port 120 sends out a manufactured product 10B. More specifically, the sending port 120 has a plurality of small holes that are larger than the particle size of the product 10B and smaller than the particle size of the conveyance auxiliary material 20, thereby allowing the product 10B to pass through the plurality of holes and not allowing the conveyance auxiliary material 20 to pass through the plurality of holes. Accordingly, the sending port 120 separates and extracts the product 10B from the mixture and sends out the extracted product 10B from the sending port 120. In other words, in this case, the tubular body 101 accepts the conveyance auxiliary material 20 that has a larger particle size than the particle size of the product 10B. The conveyance auxiliary material 20 remaining in the tubular body 101 is conveyed downstream from the sending port 120 and discharged from the conveyance auxiliary material discharge port 130 provided on a downstream side of the sending port 120. The plurality of holes of the sending port 120 are, for example, a screen (mesh) and may be vibrated by being subjected to vibration of a vibration apparatus (for example, 50 to 500 Hz) (not illustrated).

The tubular body 101 accepts the mixture between the supply port 110 and the sending port 120. The tubular body 101 includes a treatment space that is a space for manufacturing the product 10B from the treated material 10A. In the treatment space, the reaction system 1 manufactures the product 10B by subjecting a mixture of the treated material 10A and the conveyance auxiliary material 20 to a preset treatment. The tubular body 101 is covered by the temperature control apparatus 150 in an intermediate portion and is configured such that an interior of the reaction furnace 100 can be heated or cooled.

The mixture refers to a mix of the treated material 10A and the conveyance auxiliary material 20. The mixture also refers to a mix of the product 10B and the conveyance auxiliary material 20 when a reaction of the treated material 10A proceeds and the treated material 10A becomes the product 10B. In addition, naturally, the mixture also includes a mix of the treated material 10A, the product 10B, and the conveyance auxiliary material 20.

The conveyance auxiliary material discharge port 130 is an opening provided in the tubular body 101 in order to discharge the conveyance auxiliary material 20. The conveyance auxiliary material discharge port 130 is positioned on a downstream side of the sending port 120 and discharges the conveyance auxiliary material 20 from which the product 10B has been separated.

The temperature control apparatus 150 includes a heating apparatus or a cooling apparatus and controls a temperature of an interior of the reaction furnace 100 or, in other words, an interior of the tubular body 101. The temperature control apparatus 150 includes the heating apparatus so as to surround a circumference of the tubular body 101 in an intermediate portion of the reaction furnace 100. For example, the heating apparatus includes any heater capable of temperature control such as a sheathed heater, a coil heater, or a ceramic heater. For example, the heating apparatus performs heating in a range from room temperature to around 1000 degrees. The temperature control apparatus 150 may set a different temperature for each area in the intermediate portion of the reaction furnace 100 in a conveying direction of the conveying apparatus 141. The temperature control apparatus 150 may set a different temperature for each area in an up-down direction (short axis direction) of the reaction furnace 100. For example, the temperature control apparatus 150 controls temperatures in a range of 100 to 1000 degrees Celsius, preferably 300 degrees Celsius or higher, and more preferably 500 degrees Celsius or higher.

A drive apparatus 140 includes a motor and a drive force transmitting unit which fits with a drive shaft protruding from the motor and drives the conveying apparatus 141. The conveying apparatus 141 shown in Fig. 1 is, for example, a screw extended from one end to another end of the tubular body 101. In this case, the conveying apparatus 141 conveys a mixture with a screw that rotates a shaft set along a conveying direction of the mixture. Note that there may be one screw or two or more screws.

The conveying apparatus 141 conveys the mixture in the tubular body 101 from the supply port 110 to the sending port 120. In the conveying apparatus 141, a rotary shaft extending along the tubular body 101 is rotated by the drive apparatus 140. For example, the drive apparatus 140 can control a drive direction and a drive speed of the conveying apparatus 141. A shape and a mode of the conveying apparatus 141 are not particularly limited. For example, the conveying apparatus 141 is not limited to the screw described above and may be a conveyor belt or a rotating drum body. The conveying apparatus 141 may be a swinging apparatus that causes the tubular body 101 to swing. The conveying apparatus 141 may be a tilting apparatus that causes the tubular body 101 to tilt.

For example, a member that constitutes the reaction furnace 100 can be formed of an alloy, a ceramic, carbon, and a composite material containing two or more of these materials. The alloy is a metal member that contains at least one of the following alloying elements as a component: nickel, cobalt, chromium, molybdenum, tungsten, tantalum, titanium, iron, copper, aluminum, silicon, boron, and carbon. The ceramic is a ceramic member that is an oxide such as alumina or zirconia, a carbide such as silicon carbide or titanium carbide, a nitride such as silicon nitride or titanium nitride, or a boride such as chromium boride. In addition, the carbon is a carbon member such as crystalline graphite or fiber-reinforced graphite. For example, the reaction furnace 100 may be constituted of members containing an alloy, a ceramic, or carbon at least as a material for its inside.

Although not illustrated, the reaction furnace 100 may have a fluid supply port in the intermediate portion to receive a reactive fluid required for the manufacturing step of the treated material 10A. In a similar manner, the reaction furnace 100 may have a fluid discharge port in the intermediate portion to discharge the reaction fluid described above or a fluid generated after the reaction.

While components of the reaction system 1 have been described above, the reaction system 1 may include a control apparatus for controlling the components described above. For example, the control apparatus includes an arithmetic unit such as a CPU (Central Processing Unit), a GPU (Graphics Processing Unit) or an MCU (Micro Controller Unit). In addition, the control apparatus includes a storage apparatus such as a DRAM (Dynamic Random Access Memory) or a flash memory, an interface that communicably connects each component, and other peripheral circuits.

The reaction system 1 may be configured to supply the conveyance auxiliary material 20 that is smaller than the particle size of the product 10B. In this case, for example, the reaction system 1 has a plurality of holes that are larger than the particle size of the conveyance auxiliary material 20 and smaller than the particle size of the product 10B on an upstream side of the sending port 120 and causes the plurality of holes to allow passage of the conveyance auxiliary material 20 and not allow passage of the conveyance auxiliary material 20. Furthermore, in this case, the reaction system 1 has a bypass path that directs, to a downstream side of the sending port 120, the conveyance auxiliary material 20 having passed through the plurality of holes and, at the same time, directs the product 10B to the sending port 120. Accordingly, the sending port 120 separates and extracts the product 10B from the mixture and sends out the extracted product 10B from the sending port 120.

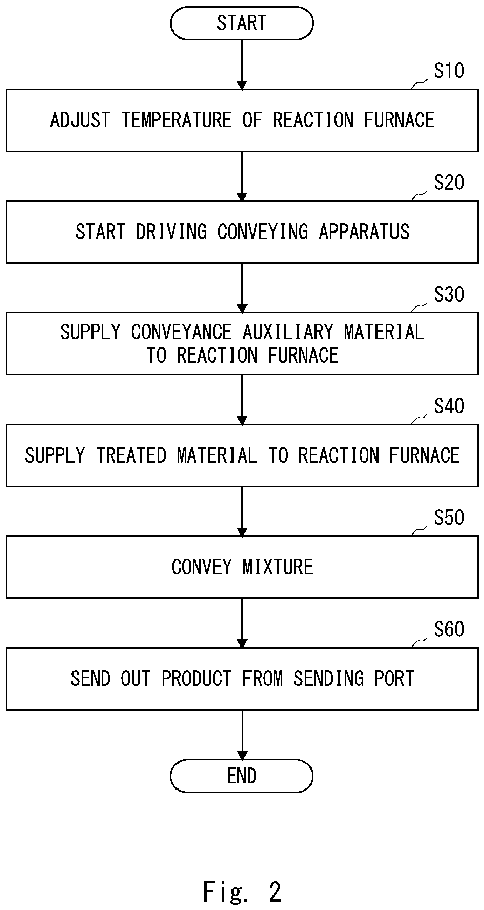

Next, a treatment executed by the reaction system 1 will be described with reference to Fig. 2. Fig. 2 is a flowchart of a method of manufacturing a product according to the first embodiment. The flowchart in Fig. 2 can also be described as showing a treatment executed by a control apparatus (not illustrated). The flowchart shown in Fig. 2 can also be described as operating procedures to be performed by a user operating the reaction system 1.

First, the reaction system 1 adjusts a temperature of the reaction furnace 100 by operating the temperature control apparatus 150 (step S10).

Next, the reaction system 1 drives the drive apparatus 140 to start driving the conveying apparatus 141 (step S20).

Next, the reaction system 1 supplies the conveyance auxiliary material 20 to the reaction furnace 100 (step S30). In addition, the reaction system 1 supplies the treated material 10A to the reaction furnace 100 (step S40). Note that step S30 and step S40 may be executed in reverse order or simultaneously. In other words, at this point, the reaction system 1 supplies the treated material 10A and the conveyance auxiliary material 20 to the reaction furnace 100 as a supplying step.

Next, as a conveying step, the reaction system 1 conveys a mixture in which the treated material 10A and the conveyance auxiliary material 20 are mixed to the sending port 120 using the conveying apparatus 141 (step S50).

Next, as a sending step, the reaction system 1 sends out the product 10B from the sending port 120 (step S60).

This concludes the description of the method of manufacturing a product executed by the reaction system 1. The reaction system 1 can continuously manufacture the product 10B by continuously performing each process described above. In other words, the reaction system 1 supplies the conveyance auxiliary material 20 together with the treated material 10A and causes the treated material 10A to react while conveying a mixture in which the conveyance auxiliary material 20 and the treated material 10A are mixed. Accordingly, the reaction system 1 can suitably and continuously manufacture the product 10B from the treated material 10A.

The first embodiment has been described above. In the reaction furnace 100, for example, a gap of a distance D1 exists between the conveying apparatus 141 and the tubular body 101 as shown in Fig. 1. The reason for the distance D1 is, for example, to prevent the conveying apparatus 141 and the reaction furnace 100 from coming into contact with each other. If the conveying apparatus 141 and the reaction furnace 100 were to come into contact with each other, abrasion powder could be generated at a contact portion. Abrasion powder contaminates the product and is therefore undesirable. In addition, particularly, when the temperature inside the reaction furnace 100 exceeds 500 degrees Celsius, there is a possibility that strong seizure will occur at the contact portion and the conveying apparatus 141 will cease to work. The distance D1 is greater than the particle size of the treated material 10A or the product 10B. Hence, if only the treated material 10A is accepted and conveyed, there is a possibility that the treated material 10A may stagnate in the gap. In consideration thereof, the reaction furnace 100 supplies the conveyance auxiliary material 20 with a larger particle size than the particle size of the treated material 10A and conveys a mixture in which the treated material 10A and the conveyance auxiliary material 20 are mixed. Due to such a configuration, the reaction system 1 can smoothly convey the treated material 10A and manufacture the product 10B.

A state of conveying the mixture in which the treated material 10A and the conveyance auxiliary material 20 are mixed with the conveying apparatus 141 is referred to as a "moving bed". In the moving bed, the treated material 10A is conveyed by the conveying apparatus 141 while in the mixed state with the conveyance auxiliary material 20 and the reaction proceeds. In other words, by generating the moving bed, the reaction system 1 causes the treated material 10A to react without stagnation. In this case, a moving speed of the conveyance auxiliary material 20 in the conveying direction of the moving bed can be regarded as equivalent to the conveyance speed of the treated material 10A in the same direction. In other words, in the reaction system 1, the movement speed of the conveyance auxiliary material 20 is set so that the reaction of the treated material 10A is completed within a preset period. Therefore, the movement speed of the conveyance auxiliary material 20 is desirably slow enough not to impair productivity of the reaction system 1 that manufactures the product 10B and is, for example, 10 meters per hour or less. More preferably, the movement speed of the conveyance auxiliary material 20 is 3 meters per hour or less and, even more preferably, 1 meter per hour or less. As described above, according to the present embodiment, a reaction system and the like that can manufacture products in an efficient manner can be provided.

### < Second Embodiment >

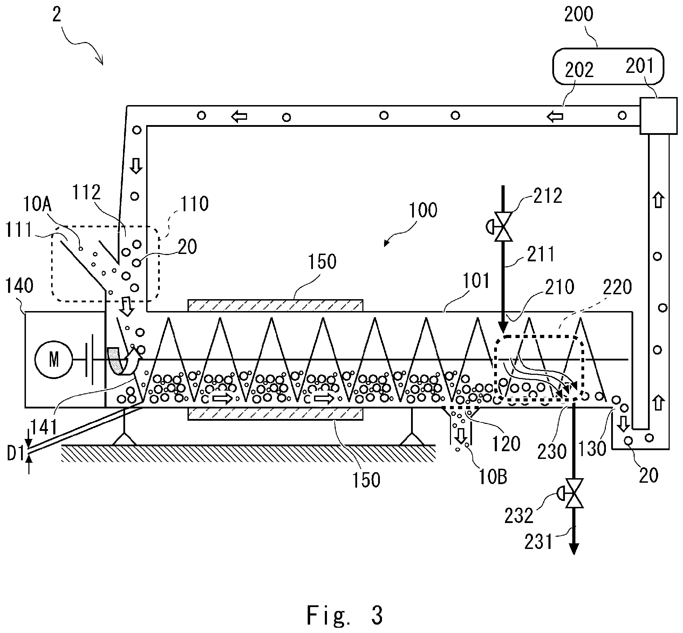

Next, a second embodiment will be described. Fig. 3 is an overall configuration diagram of a reaction system 2 according to the second embodiment. The reaction system 2 according to the second embodiment has a function of causing the conveyance auxiliary material 20 discharged from the conveyance auxiliary material discharge port 130 to circulate. In addition, the reaction system 2 performs a preset recovery treatment with respect to the conveyance auxiliary material 20 after the product 10B is separated therefrom.

The reaction system 2 according to the present embodiment includes a circulatory apparatus 200 on a downstream side of the sending port 120. The circulatory apparatus 200 receives the conveyance auxiliary material 20 from which the product 10B has been separated from the conveyance auxiliary material discharge port 130 and causes the received conveyance auxiliary material discharge port 130 to be circulated to the supply port 110. The circulatory apparatus 200 includes a force-feed apparatus 201 and an auxiliary material conveying pipe 202.

For example, the force-feed apparatus 201 is a pump provided in the auxiliary material conveying pipe 202 and force-feeds air and the conveyance auxiliary material 20 in a direction from the conveyance auxiliary material discharge port 130 toward the supply port 110. The auxiliary material conveying pipe 202 is a pipe that connects the conveyance auxiliary material discharge port 130 and the supply port 110 to each other and that enables passage of the conveyance auxiliary material 20. Due to being configured in this manner, the reaction system 2 can repeatedly use the conveyance auxiliary material 20. Therefore, the reaction system 2 can manufacture the product 10B in an efficient manner.

In addition, the reaction system 2 according to the present embodiment has a function of subjecting the conveyance auxiliary material 20 after the product 10B is separated therefrom to a preset treatment. In the reaction system 2, the circulatory apparatus 200 further includes a medium accepting unit 210 and a contact unit 220.

The medium accepting unit 210 accepts a recovery medium to be brought into contact with the conveyance auxiliary material 20 after the product 10B is separated therefrom. Depending on the application, various substances can be adopted as the recovery medium. For example, the recovery medium may be a cleaning medium for cleaning the conveyance auxiliary material 20. A mode of the cleaning medium is not particularly limited. In other words, the cleaning medium may be a gas, a liquid, a solid, or a supercritical fluid. The cleaning medium may be a mixture made up of at least two of the above. The cleaning medium is, for example, water vapor. The cleaning medium is, for example, an organic solvent such as alcohol. The cleaning medium is, for example, a sublimable solid such as naphthalene. The medium accepting unit 210 is provided on a downstream side of the sending port 120. The medium accepting unit 210 is connected to a recovery medium feeding pipe 211 and accepts the recovery medium supplied via a first valve 212 to the reaction furnace 100.

The contact unit 220 brings the recovery medium into contact with the conveyance auxiliary material 20. The contact unit 220 is a space which is provided on a downstream side of the sending port 120 and on an upstream side of the conveyance auxiliary material discharge port 130 and in which the conveyance auxiliary material 20 and the recovery medium come into contact with each other. After the conveyance auxiliary material 20 and the recovery medium come into contact with each other in the contact unit 220, the conveyance auxiliary material 20 is discharged from the conveyance auxiliary material discharge port 130.

The circulatory apparatus 200 further includes a medium discharging unit 230. In the circulatory apparatus 200, the medium accepting unit 210 accepts a recovery medium for cleaning the conveyance auxiliary material 20. In this case, the medium discharging unit 230 discharges, to outside of the reaction furnace 100, the recovery medium after coming into contact with the conveyance auxiliary material 20. The medium discharging unit 230 is connected to a recovery medium discharge pipe 231 and discharges the recovery medium to the outside of the reaction furnace 100 via a second valve 232. Due to being configured in this manner, the reaction system 2 can cause the conveyance auxiliary material 20 to be suitably circulated.

The conveyance auxiliary material 20 accepted by the reaction furnace 100 may be a catalyst that assists in the reaction of the treated material 10A and may contain a metallic element. In this case, the circulatory apparatus 200 accepts a recovery medium containing a non-metallic element for reducing the conveyance auxiliary material 20. More specifically, the conveyance auxiliary material 20 may contain a metal such as iron, nickel, or cobalt. In this case, for example, the recovery medium may be a gas containing hydrogen.

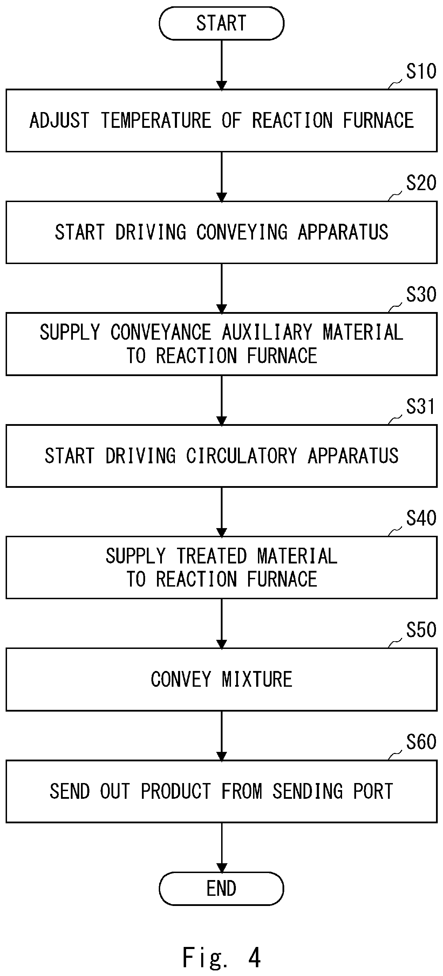

Next, Fig. 4 is a flowchart of a method of manufacturing a product according to the second embodiment. The flowchart shown in Fig. 4 differs from the flowchart shown in Fig. 2 in that the flowchart shown in Fig. 4 includes step S31 after step S30.

In step S31, the reaction system 2 starts driving the circulatory apparatus 200. Accordingly, the circulatory apparatus 200 subjects the conveyance auxiliary material 20 supplied to the reaction furnace 100 to a recovery treatment and once again supplies the conveyance auxiliary material 20 having been subjected to the recovery treatment to the supply port 110 via the conveyance auxiliary material discharge port 130.

As described above, the reaction system 2 generates a moving bed in an efficient manner by causing the conveyance auxiliary material 20 to be suitably circulated. Therefore, according to the present embodiment, a reaction system and the like that can manufacture products in an efficient manner can be provided.

### < Third embodiment >

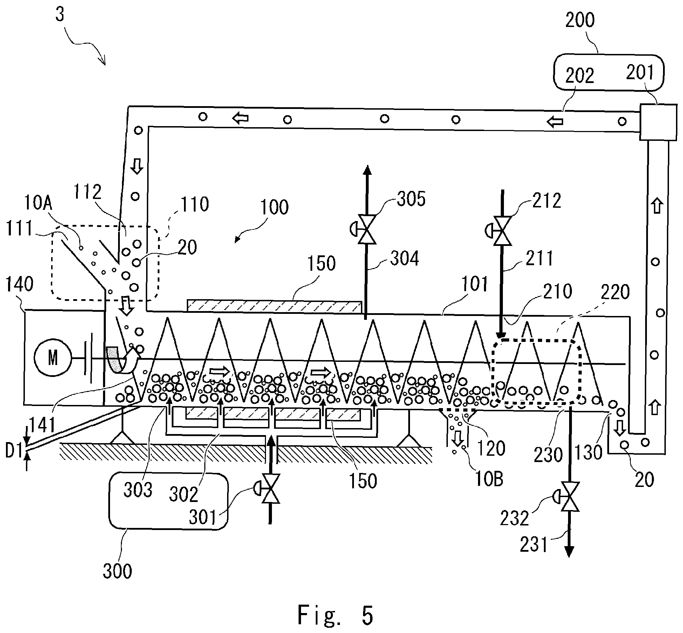

Next, a third embodiment will be described. Fig. 5 is an overall configuration diagram of a reaction system 3 according to the third embodiment. The reaction system 3 according to the present embodiment differs from the embodiment described above in that the reaction system 3 further includes a fluidized bed generating apparatus 300.

The fluidized bed generating apparatus 300 improves fluidity of a mixture being conveyed by the conveying apparatus 141 by dispensing an agitation fluid to the mixture. In this case, a mixture in a state where fluidity has been improved by the agitation fluid is also referred to as a "fluidized bed". The fluidized bed generating apparatus 300 includes, as main components, a third valve 301, a fluid transmission pipe 302, and a dispensing port 303. By supplying the agitation fluid to the dispensing port 303, the fluidized bed generating apparatus 300 improves fluidity of a moving bed and generates a fluidized bed.

The fluid transmission pipe 302 receives the agitation fluid via the third valve 301 and supplies the received agitation fluid to the dispensing port 303. The agitation fluid is a fluid for agitating the mixture and, more specifically, for example, the agitation fluid is an inert nitrogen gas. When the treated material 10A must be brought into contact with a reactive fluid when manufacturing the product 10B from the treated material 10A, the reactive fluid may be adopted as the agitation fluid. Accordingly, the reaction system 3 can accelerate the reaction by the reactive fluid while improving the fluidity of the mixture.

The dispensing port 303 is an opening provided in the tubular body 101 of the reaction furnace 100. In other words, the reaction furnace 100 includes the dispensing port 303 that dispenses the agitation fluid to the mixture. For example, the dispensing port 303 is provided in an area which is in a lower part of the tubular body 101 and in which a mixture being conveyed by the conveying apparatus 141 is present. Therefore, the agitation fluid that is dispensed from the dispensing port 303 comes into direct contact with the mixture. Accordingly, the mixture is agitated and fluidity improves.

The conveying apparatus 141 according to the present embodiment conveys the mixture in contact with the agitation fluid. In other words, the reaction system 3 conveys the mixture in a state where the mixture has been agitated by the agitation fluid and fluidity of the mixture has improved.

Preferably, the dispensing port 303 is present in plurality along the conveying direction of the mixture in the tubular body 101. In this case, the plurality of dispensing ports 303 may be linearly arrayed from, for example, an upstream side toward a downstream side. Alternatively, the plurality of dispensing ports 303 may be, for example, arranged spirally in the tubular body 101. In the reaction system 3 according to the present embodiment, the particle size of the treated material 10A is smaller than the particle size of the conveyance auxiliary material 20. For example, the particle size of the treated material 10A is 0.05 mm or less. In addition, for example, the particle size of the conveyance auxiliary material 20 is 0.3 mm or more, preferably 0.5 mm or more, and more preferably 1 mm or more. In this case, preferably, a size of the opening of the dispensing port 303 is larger than the particle size of the treated material 10A and smaller than the particle size of the conveyance auxiliary material 20. In other words, for example, the size of the opening of the dispensing port 303 is 0.1 mm or more.

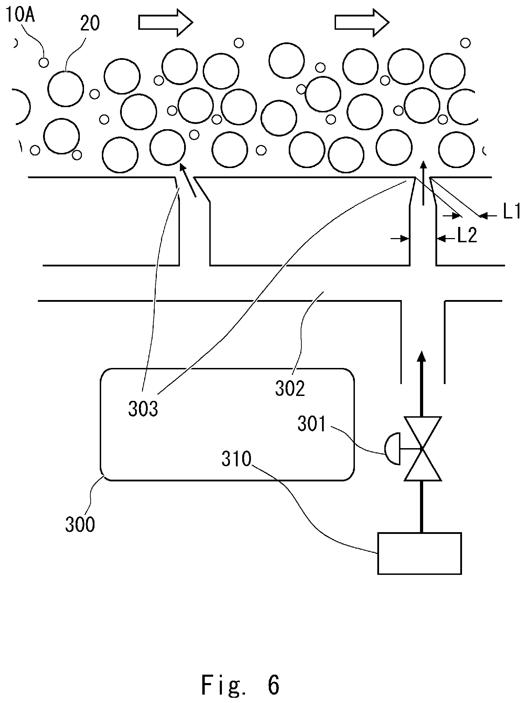

Fig. 6 is a diagram showing details of the fluidized bed generating apparatus 300. The fluidized bed generating apparatus 300 further includes an adjusting unit 310. The adjusting unit 310 adjusts at least one of a flow rate, a flow velocity, or a temperature of the agitation fluid to be supplied to the reaction furnace 100. In order to realize this function, for example, the adjusting unit 310 includes a force-feed pump, a temperature adjusting apparatus, and the like.

In addition, as shown in Fig. 6, the fluid transmission pipe 302 may have varying pipe thickness at the dispensing port 303. The fluid transmission pipe 302 shown in Fig. 6 has a diameter of L2 and the dispensing port 303 has a diameter of L1 that is smaller than the diameter L2. Due to a cross-sectional area of the dispensing port 303 being smaller than a cross-sectional area of the fluid transmission pipe 302, the flow velocity of the agitation fluid in the dispensing port 303 increases. Accordingly, even when the particle size of the treated material 10A is smaller than the opening of the dispensing port 303 as described above, the fluidized bed generating apparatus 300 can prevent the treated material 10A from stagnating at the dispensing port 303 or the treated material 10A from penetrating into the dispensing port 303 and can suitably generate a fluidized bed. Note that the diameter L1 of the dispensing port 303 may be smaller than the particle size of the treated material 10A.

In addition, as shown in Fig. 6, the fluid transmission pipe 302 can be adjusted for optimum fluidity by changing an angle of a portion of the dispensing port 303. The fluidized bed generating apparatus 300 may include the third valve 301, the fluid transmission pipe 302, and the dispensing port 303 of a plurality of different systems. Accordingly, the fluidized bed generating apparatus 300 can set the angle of the portion of the dispensing port 303 or set a different flow velocity for each different system. In this case, the adjusting unit 310 may be responsible for switching systems and distributing flow rates. In other words, in this case, the adjusting unit 310 can also adjust a dispensing direction of the agitation fluid.

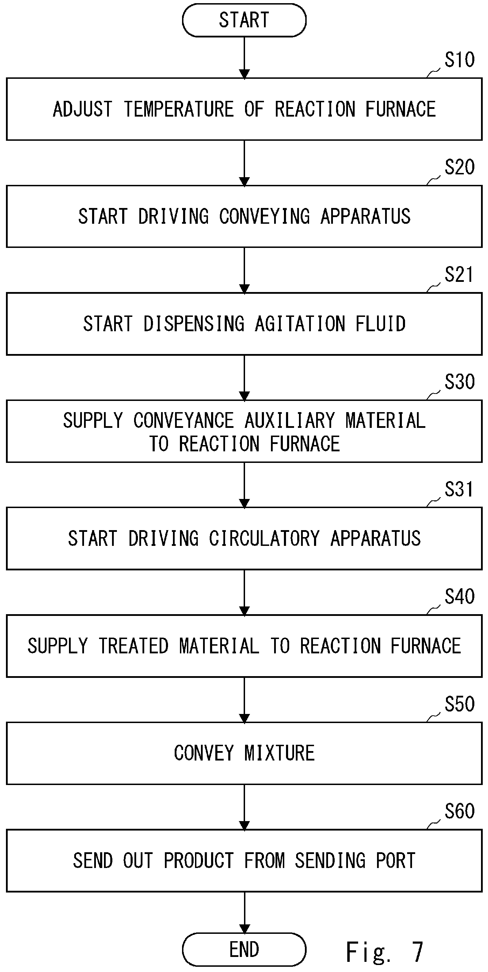

Fig. 7 is a flowchart of a method of manufacturing a product according to the third embodiment. The flowchart shown in Fig. 7 differs from the flowchart shown in Fig. 4 in that the flowchart shown in Fig. 7 includes step S21 after step S20.

In step S21, the reaction system 3 starts dispensing the agitation fluid (step S31). By dispensing the agitation fluid from the dispensing port 303 before the treated material 10A or the conveyance auxiliary material 20 is supplied to the tubular body 101, the reaction system 3 prevents the treated material 10A or the conveyance auxiliary material 20 from penetrating into the dispensing port 303.

In addition, in this case, in step S50 (conveying step), the reaction system 3 conveys a mixture being agitated by the dispensed agitation fluid. In other words, the reaction system 3 generates a moving bed and a fluidized bed and accelerates the reaction of the treated material 10A in a state where there is a mixture of the moving bed and the fluidized bed. Therefore, according to the present embodiment, a reaction system and the like that can manufacture products in an efficient manner can be provided.

While the present invention has been described above with reference to the embodiments, the present invention is not limited to the above embodiments. Various modifications to the configurations and details of the present invention will occur to and can be made by those skilled in the art within the scope of the invention.

The present application claims priority on the basis of Japanese Patent Application No. 2022-132361 filed on August 23, 2022, the entire contents of which are incorporated herein by reference.

### Industrial Applicability

For example, the present invention can be used in systems for manufacturing materials for batteries such as solid electrolytes or in systems for manufacturing batteries.

### Reference Signs List

- 1: REACTION SYSTEM
- 2: REACTION SYSTEM
- 3: REACTION SYSTEM
- 10A: TREATED MATERIAL
- 10B: PRODUCT
- 20: CONVEYANCE AUXILIARY MATERIAL
- 100: REACTION FURNACE
- 101: TUBULAR BODY
- 110: SUPPLY PORT
- 111: FIRST SUPPLY PORT
- 112: SECOND SUPPLY PORT
- 120: SENDING PORT
- 130: CONVEYANCE AUXILIARY MATERIAL DISCHARGE PORT
- 140: DRIVE APPARATUS
- 141: CONVEYING APPARATUS
- 150: TEMPERATURE CONTROL APPARATUS
- 200: CIRCULATORY APPARATUS
- 201: FORCE-FEED APPARATUS
- 202: AUXILIARY MATERIAL CONVEYING PIPE
- 210: MEDIUM ACCEPTING UNIT
- 211: RECOVERY MEDIUM FEEDING PIPE
- 212: FIRST VALVE
- 220: CONTACT UNIT
- 230: MEDIUM DISCHARGING UNIT
- 231: RECOVERY MEDIUM DISCHARGE PIPE
- 232: SECOND VALVE
- 300: FLUIDIZED BED GENERATING APPARATUS
- 301: THIRD VALVE
- 302: FLUID TRANSMISSION PIPE
- 303: DISPENSING PORT
- 304: FLUID RECOVERY PIPE
- 305: FOURTH VALVE
- 310: ADJUSTING UNIT

## Claims

1. A reaction system that manufactures a product from a treated material, the reaction system comprising:
a reaction furnace including a supply port configured to receive the treated material and a conveyance auxiliary material, a sending port configured to send out the product having been manufactured, and a tubular body between the supply port and the sending port and configured to accept a mixture in which the treated material or the product and the conveyance auxiliary material are mixed; and
a conveying apparatus configured to convey the mixture in the tubular body from the supply port to the sending port.

2. The reaction system according to claim 1, wherein
the tubular body is configured to accept the conveyance auxiliary material with a particle size larger than a particle size of the product, and
the sending port is configured to send out the product via a plurality of holes through which the product can pass but the conveyance auxiliary material cannot pass.

3. The reaction system according to claim 2, further comprising a circulatory apparatus configured to cause the conveyance auxiliary material from which the product has been separated to circulate toward the supply port on a downstream side of the sending port.

4. The reaction system according to claim 3, wherein the circulatory apparatus further includes: a medium accepting unit configured to accept a recovery medium to be brought into contact with the conveyance auxiliary material after the product is separated therefrom; and a contact unit configured to bring the recovery medium into contact with the conveyance auxiliary material.

5. The reaction system according to claim 4, wherein the circulatory apparatus further includes a medium discharging unit configured to receive the recovery medium for cleaning the conveyance auxiliary material and to discharge the recovery medium after coming into contact with the conveyance auxiliary material.

6. The reaction system according to claim 4, wherein
the conveyance auxiliary material accepted by the reaction furnace contains a metallic element that assists in a reaction of the treated material, and
the circulatory apparatus is configured to accept the recovery medium containing a non-metallic element for reducing the conveyance auxiliary material.

7. The reaction system according to claim 1, wherein the conveying apparatus is configured to convey the mixture with a screw that rotates a shaft set along a conveying direction of the mixture.

8. The reaction system according to claim 7, wherein the reaction furnace is configured to accept the conveyance auxiliary material with a particle size larger than a particle size of the treated material.

9. The reaction system according to any one of claims 1 to 8,
wherein
the reaction furnace further includes a dispensing port configured to dispense an agitation fluid to the mixture, and
the conveying apparatus is configured to convey the mixture in contact with the agitation fluid.

10. The reaction system according to claim 9, wherein the dispensing port is present in plurality along a conveying direction of the mixture in the tubular body.

11. The reaction system according to claim 9, further comprising
a fluidized bed generating apparatus configured to generate a fluidized bed by supplying the agitation fluid to the dispensing port, wherein
the fluidized bed generating apparatus includes an adjusting unit configured to adjust at least any one of a flow rate, a flow velocity, a temperature, and a dispensing direction of the agitation fluid to be supplied to the reaction furnace.

12. A method of manufacturing a product in which the product is manufactured from a treated material, the method of manufacturing a product comprising:
a supplying step of supplying the treated material and a conveyance auxiliary material to a reaction furnace;
a conveying step of conveying a mixture in which the treated material and the conveyance auxiliary material are mixed to a sending port with a conveying apparatus; and
a sending step of sending out the product generated from the treated material from the sending port.

13. The method of manufacturing a product according to claim 12, wherein in the conveying step, the mixture having been agitated by dispensing an agitation fluid to the mixture is conveyed.
